(19) 
Europäisches
Patentamt
European
Patent Office
Office européen
des brevets

(11) **EP 4 035 904 A1**

(12) **EUROPEAN PATENT APPLICATION**
published in accordance with Art. 153(4) EPC

(43) Date of publication:
**03.08.2022 Bulletin 2022/31**

(21) Application number: **20869129.5**

(22) Date of filing: **16.09.2020**

(51) International Patent Classification (IPC):
**B60B 3/04** (2006.01)       **B60B 7/00** (2006.01)
**B21D 13/10** (2006.01)

(86) International application number:
**PCT/KR2020/012497**

(87) International publication number:
**WO 2021/060767 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2019 KR 20190117307**

(71) Applicant: **POSCO
Pohang-si, Gyeongsangbuk-do 37859 (KR)**

(72) Inventors:
• **KIM, Hong-Gee
  Incheon 21985 (KR)**
• **SON, Hyun-Sung
  Incheon 21985 (KR)**
• **LEE, Min-Sung
  Incheon 21985 (KR)**
• **KWON, Hyuk-Sun
  Incheon 21985 (KR)**
• **CHUNG, Youn-Il
  Incheon 21985 (KR)**

(74) Representative: **Zech, Stefan Markus et al
Meissner Bolte Patentanwälte
Rechtsanwälte Partnerschaft mbB
Postfach 86 06 24
81633 München (DE)**

(54) **WHEEL DISC AND MANUFACTURING METHOD THEREFOR**

(57)     A wheel disc, according to one aspect of the present invention, having a bolt hole for bolt fastening is divided into a first region, which extends in the circumferential direction of the bolt hole so as to have a preset width, and a second region excluding the first region, wherein the first region can be provided so as to have an average tensile strength lower than that of the second region.

【FIG. 10】

(a)

(b)

EP 4 035 904 A1

**Description**

[Technical Field]

The present disclosure relates to a wheel disc and a method of manufacturing the same, and more particularly, to a wheel disc of a steel wheel applied to automobiles and a method of manufacturing the same.

[Background Art]

Vehicles refer to machines that move by transmitting power generated by an engine to wheels. In recent years, securing both energy efficiency and passenger safety at the same time has been a major technical subject in the automobile industry, and various studies have been conducted to increase the strength and decrease weight of automobile parts to achieve such technical effects.

In particular, an automobile wheel including a wheel and a tire is an automobile part significantly affecting energy efficiency, and in recent years, there have been attempts to manufacture wheels using an aluminum alloy, magnesium alloy or high-strength steel. In particular, wheels manufactured using high-strength steel has high strength compared to wheels formed of an aluminum alloy or a magnesium alloy, and low-cost characteristics may be effectively secured by minimizing the use of relatively expensive alloying elements.

However, since there are various technical difficulties in manufacturing a wheel using high-strength steel, the current situation is that the manufacturing of a wheel using high-strength steel has not been actively performed. In general, a steel wheel is provided by welding a wheel disc directly connected to a hub of an axle to a rim provided in a circumferential direction of the wheel disc and connected directly to a tire, but in the case of manufacturing a wheel disc using high-strength steel, it is not easy to form complex shapes due to the poor formability of high-strength steel and a load of a forming press may be significantly increased, which may cause premature wear of a mold.

As an alternative to solving such a problem, a method of manufacturing a wheel disc by cold forming heat-treated steel and then performing a post-heat treatment may be considered. This is because, since heat-treated steel has relatively low strength, cold forming is easy, while high-strength properties may be secured by post-heat treatment.

In addition, as another alternative, a method of manufacturing a wheel disc by heating a material to a high temperature and performing hot forming and then quenching (rapidly cooling) the material in a mold may be considered. With this method, it is possible to form a wheel disc with a more complex shape by utilizing elongation characteristics increased at high temperatures, to secure high strength characteristics by quenching in the mold after molding, and to minimize deformation such as distortion that occurs during cooling.

However, the manufacturing method described above is effective for improving the strength of the wheel disc itself, but the effect of improving the strength of the wheel disc does not substantially contribute to the improvement of durability of the wheel itself, and thus, there is a need for a technical solution capable of effectively improving the durability of the wheel itself.

(Related art document)

(Patent document 1) Korean Patent Laid-Open Publication No. 10-2017-0066750 (published on June 15, 2017)

[Disclosure]

[Technical Problem]

An aspect of the present disclosure may provide a wheel disc having excellent durability, while supporting high strength characteristics, and a manufacturing method thereof.

The subject of the present disclosure is not limited to the above. A person skilled in the art will have no difficulty in understanding further problems of the present disclosure from the general contents of the present disclosure.

[Technical Solution]

According to an aspect of the present disclosure, a wheel disc including a bolt hole for bolt fastening, includes a first region extending to have a predetermined width in a circumferential direction of the bolt hole; and a second region, other than the first region, wherein the first region has an average tensile strength lower than that of the second region.

The average tensile strength of the first region may be 1/3 to 2/3 of the average tensile strength of the second region.

The average tensile strength of the second region may be 980 MPa or greater.

A width of the first region may be 1 to 10 mm.

The wheel disc may be a steel plate wheel disc.

The first region and the second region may be divided by a non-bonding type boundary portion.

According to an aspect of the present disclosure, a method of manufacturing a wheel disc includes: preparing a material for a wheel disc; forming the material to provide a wheel disc; and a heat treatment operation of heating and slowly cooling a peripheral region of a bolt hole of the wheel disc.

According to an aspect of the present disclosure, a method of manufacturing a wheel disc includes: preparing a material for a wheel disc; forming the material to provide a wheel disc; and a heat treatment operation of heating and cooling the wheel disc, wherein a peripheral region of a bolt hole of the wheel disc and a region other than the peripheral region of the bolt hole of the wheel disc are separately cooled, such that the peripheral region of the bolt hole of the wheel disc may be cooled by applying a slow cooling condition and the region other than the peripheral region of the bolt hole of the wheel disc may be cooled by applying a rapid cooling condition.

According to an aspect of the present disclosure, a method of manufacturing a wheel disc includes: preparing a material for a wheel disc; heating the material and subsequently forming a wheel disc using a mold; and cooling the wheel disc within the mold, wherein the material is heated by distinguishing between a peripheral region of a bolt hole of the wheel disc and a region other than the peripheral region of the bolt hole of the wheel disc, and the peripheral region of the bolt hole of the wheel disc may be heated to a temperature equal to or lower than Ac1 and the region other than the peripheral region of the bolt hole of the wheel disc may be heated to a temperature equal to or higher than Ac3.

According to an aspect of the present disclosure, a method of manufacturing a wheel disc includes: preparing a material for a wheel disc; heating the material and subsequently forming a wheel disc using a mold; and cooling the wheel disc within the mold, wherein the wheel disc is cooled by distinguishing between a peripheral region of a bolt hole of the wheel disc and a region other than the peripheral region of the bolt hole of the wheel disc, and the peripheral region of the bolt hole of the wheel disc may be cooled by applying a slow cooling condition and the region other than the peripheral region of the bolt hole of the wheel disc may be cooled by applying a rapid cooling condition.

The means for solving the above problems do not list all the features of the present disclosure, and various features of the present disclosure and its advantages and effects may be understood in more detail with reference to the following specific examples.

[Advantageous Effects]

According to an aspect of the present disclosure, a wheel disc capable of effectively improving durability of a steel wheel and a manufacturing method thereof may be provided.

The effects of the present disclosure are not limited to the effects described above and may be interpreted as a concept including a technical effect easily derived by a person skilled in the art from the following descriptions.

[Description of Drawings]

FIG. 1(a) is a perspective view and FIG. 1(b) is a plan view schematically illustrating an example of a steel wheel.

FIG. 2 is a photograph of cracks occurring around a bolt hole in evaluation of durability of a steel wheel to which high-strength steel is applied.

FIG. 3 is a photograph of a cross-section of a cracked region of the steel wheel of FIG. 2 observed with an optical microscope.

FIG. 4 is a result of stress analysis of a wheel disc not reflecting a bolt fastening coupling force.

FIGS. 5 to 7 are results of stress analysis of wheel discs to which 0.005 mm, 0.020 mm, and 0.05 mm of bolt fastening displacements are applied, respectively.

FIG. 8 is a result of three-dimensional stress distribution analysis in a peripheral portion of a bolt hole of a wheel disc having a tensile strength of a 440 MPa class.

FIG. 9 is a result of three-dimensional stress distribution analysis in a peripheral portion of a bolt hole of a wheel disc having a tensile strength of 1500 MPa grade.

FIG. 10(a) is a view schematically illustrating a steel wheel having a wheel disc according to an aspect of the present disclosure, and FIG. 10(b) is an enlarged view of a peripheral portion of a bolt hole of FIG. 10(a).

FIG. 11 is photographs in which a structure of a first region of material No. 2 is observed.

FIG. 12 is photographs in which structures of a first region and a second region are observed in a case in which different heating temperatures are applied in a material No. 3.

FIG. 13 is photographs in which structures of a first region and a second region are observed in a case in which different heating temperatures are applied in a material No. 4.

FIG. 14 is photographs of observing a peripheral region of a bolt hole after performing CFT evaluation on each of a case in which the same cooling rate is applied and a case in which different cooling rates are applied in material No. 4.

[Best Mode for Invention]

The present disclosure relates to a wheel disc and a method for manufacturing the same. Hereinafter, embodiments of the present disclosure will be described. Embodiments of the present disclosure may be modified in various forms, and the scope of the present disclosure should not be construed as being limited to the embodiments described below. These embodiments are provided in order to further explain the present disclosure to those skilled in the art to which the present disclosure pertains.

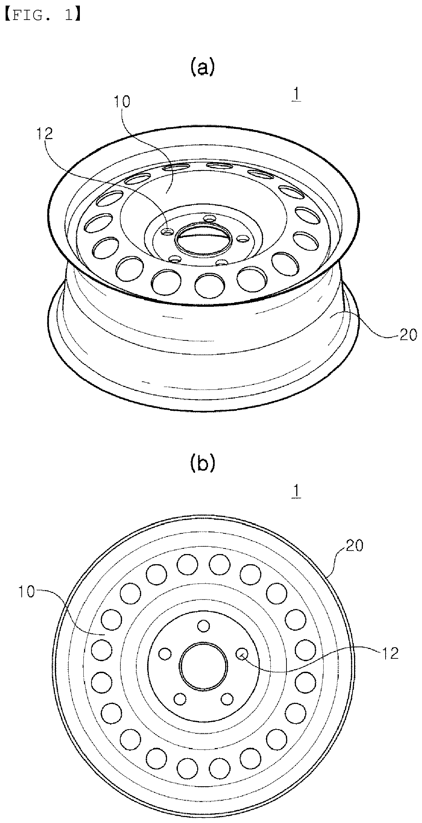

FIG. 1(a) is a perspective view and FIG. 1(b) a plan view schematically illustrating an example of a steel wheel.

As illustrated in FIG. 1, in general, a steel wheel 1 includes a wheel disc 10 directly connected to an axle and a rim 20 provided in a circumferential direction of the wheel disc 10 and allowing a tire to be coupled thereto, and a plurality of bolt holes 12 for bolting to the axle are formed through the wheel disc 10.

The inventor of the present disclosure has conducted in-depth research on a method of applying high-strength steel to a steel wheel as a method of improving durability of the steel wheel, but determined that simply applying high-strength steel to the steel wheel has a limitation in improvement of the durability of the steel wheel.

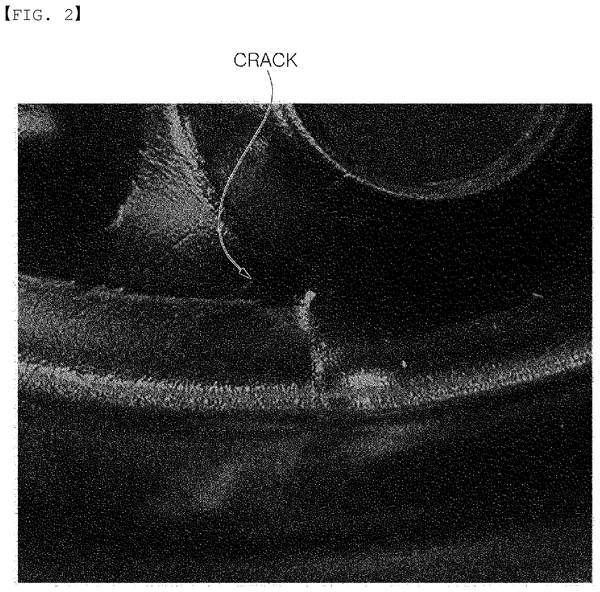

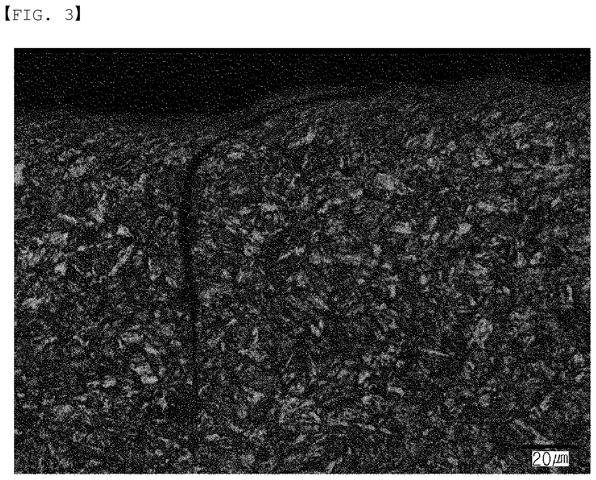

FIG. 2 is a photograph of cracks occurring near the bolt hole in evaluation of durability a steel wheel to which high-strength steel is applied, and FIG. 3 is a photograph of a cross-section of the cracked region of the steel wheel of FIG. 2 with an optical microscope.

The inventor of the present disclosure manufactured a steel wheel having a tensile strength of about 1000 MPa or more, and conducted a cornering fatigue test (CFT) on the corresponding steel wheel. Here, the cornering fatigue test used 1.54 kN·m condition. Contrary to the expectation that the steel wheel manufactured by applying high-strength steel sheet would show excellent cornering fatigue test results, cracks occurred and propagated in a peripheral region of the bolt hole as illustrated in FIG. 2.

As a result of observing a cross section of the wheel disc in the region in which cracks occurred, it was confirmed that cracks started and progressed obliquely from a surface of the wheel disc as illustrated in FIG. 3. The inventor of the present disclosure determined that the progress of the crack was similar to that of a typical fretting fatigue crack, and derived the present disclosure, in that an effect of increasing the durability based on an increment of strength may be maximized by positively suppressing the fretting fatigue cracks occurring in the peripheral portion of the bolt hole of a steel wheel to which high-strength steel is applied.

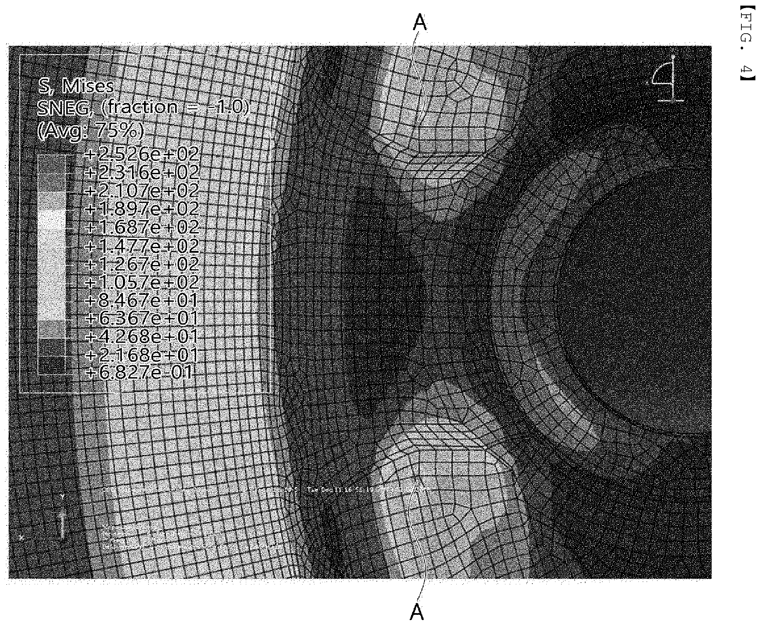

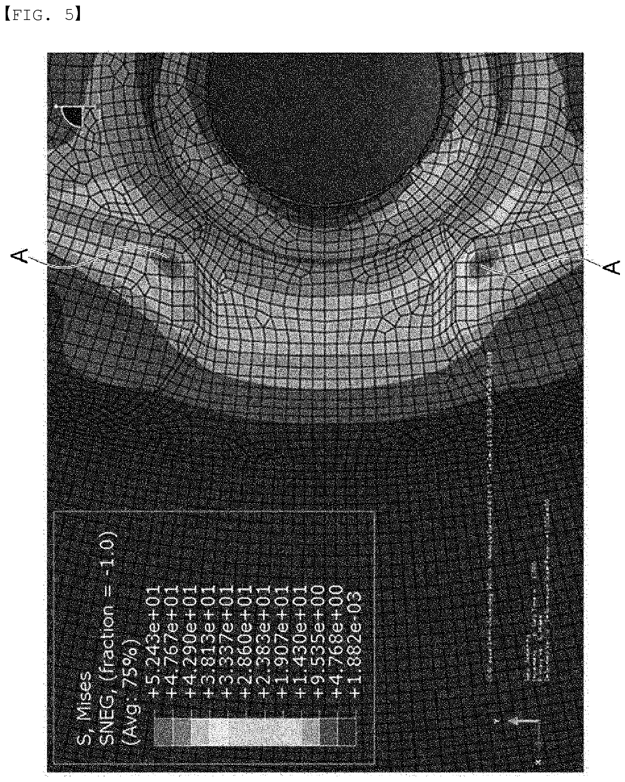

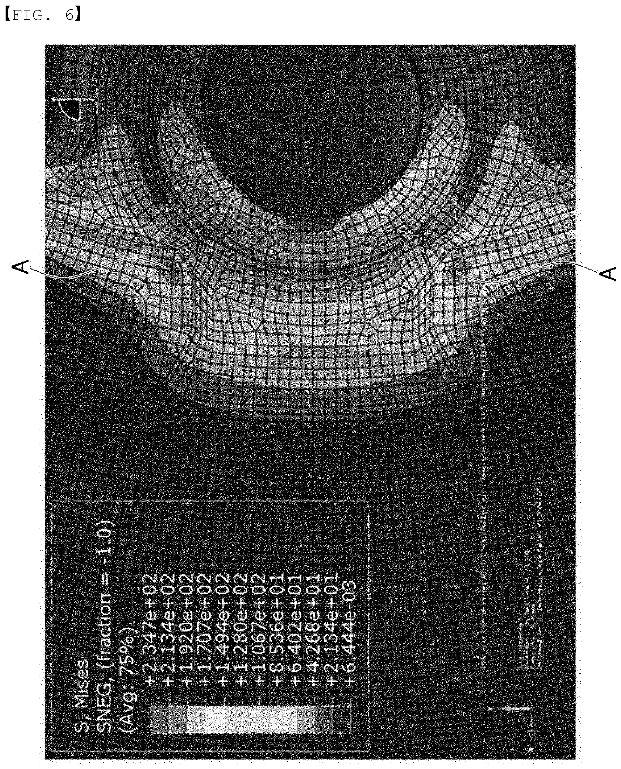

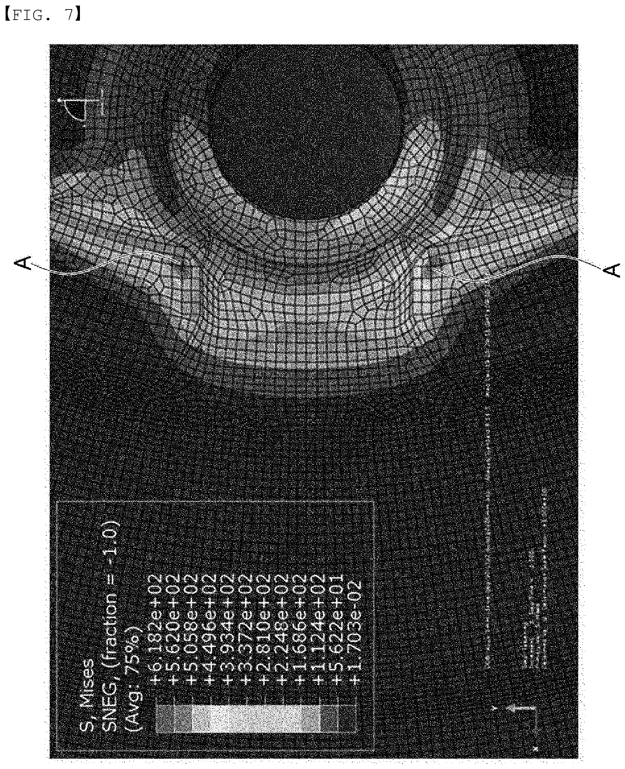

The inventor of the present disclosure evaluated the stress applied to the wheel disc using the finite element analysis method. FIG. 4 shows a result of a stress analysis ignoring a bolt fastening coupling force, and FIGS. 5 to 7 show results of the stress analysis when bolting displacements of 0.005 mm, 0.020 mm, and 0.05 mm are applied, respectively. As illustrated in FIGS. 4 to 7, a stress concentration is the highest in a region A spaced apart from the bolt hole 12 by a predetermined interval, and it can be seen that the region indicated by A in FIGS. 4 to 7 is a region corresponding to the region in which cracks occur in FIG. 3.

In addition, from FIGS. 4 to 7, it can be seen that as bolt fastening displacement increases, the stress concentration in the region indicated by A increases, and thus, it can be confirmed that the bolt fastening force is a major variable in whether or not cracks occur when bolting the steel wheel. However, since automobile companies typically designate a bolt fastening torque as a specific value when bolting the steel wheel, the present inventors derived the present disclosure based on a recognition that a method of dispersing the stress concentration in the region A under a constant bolting force condition rather than controlling the bolting force is more effective for suppressing the occurrence of cracks.

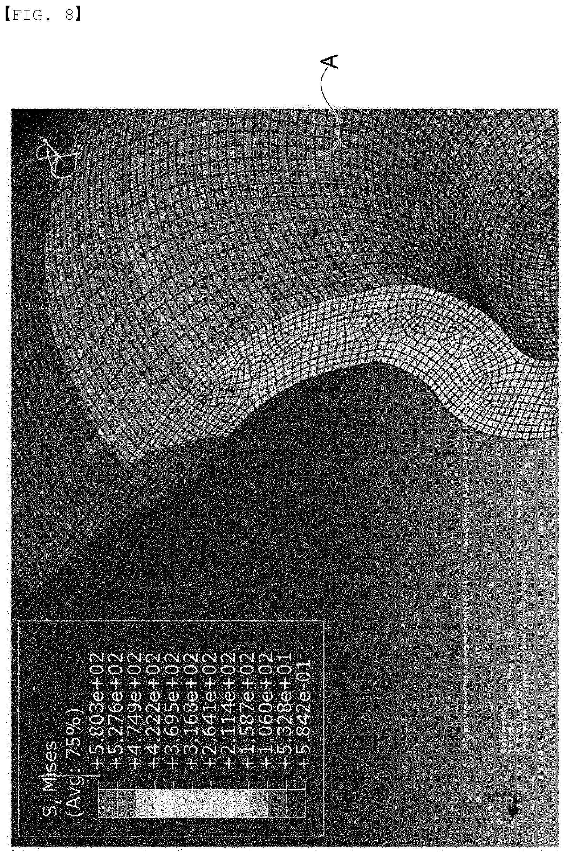

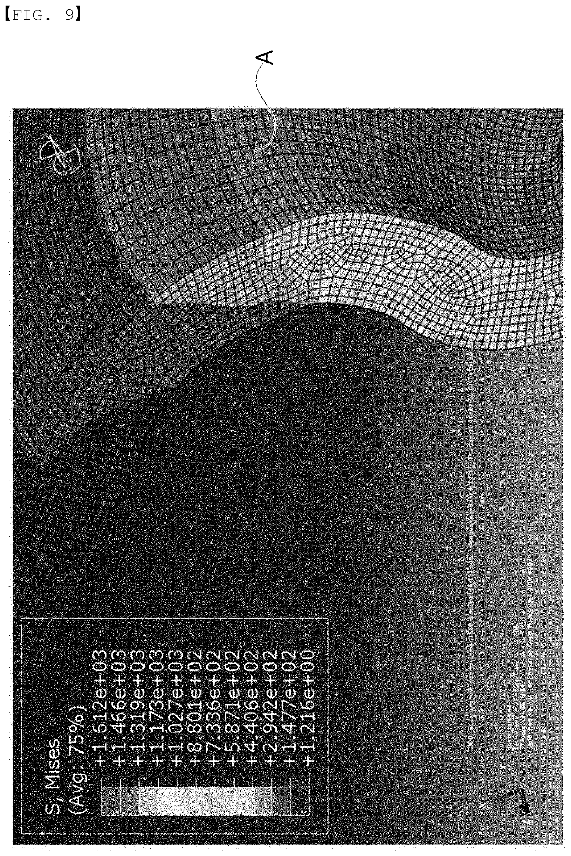

FIG. 8 is a result of three-dimensional stress distribution analysis in a peripheral portion of a bolt hole of a wheel disc having a tensile strength of a 440 MPa class, and FIG. 9 is a result of three-dimensional stress distribution analysis in a peripheral portion of a bolt hole of a wheel disc having a tensile strength of 1500 MPa grade. In the case of FIGS. 8 and 9, the same conditions were used for displacement when the bolt hole was fastened.

It can be seen that, as illustrated in FIG. 8, a stress of about 381 MPa is concentrated in a peripheral portion of the bolt hole of the wheel disc having a tensile strength of 440 MPa class (in particular, a region corresponding to the region indicated by A in FIGS. 4 to 7), while, as illustrated in FIG. 9, a stress of about 935 MPa is concentrated in the peripheral portion of the bolt hole of the wheel disc having a tensile strength of 1500 MPa grade (in particular, a region corresponding to the region indicated by A in FIGS. 4 to 7). In other words, since the stress concentration in the peripheral portion of the bolt hole increases as the tensile strength of the wheel disc increases, the effect of increasing durability based on the increase in strength of the material is canceled out by fretting fatigue cracks formed in the peripheral portion of the bolt hole.

Therefore, in the present disclosure, while increasing the strength of the wheel disc, the stress concentration of the peripheral portion of the bolt hole is alleviated by forming the peripheral region of the bolt hole with a material having a relatively low strength to positive suppress the occurrence of fretting fatigue cracks, thereby maximizing the

EP 4 035 904 A1

effect of improving durability of the steel wheel based on the high strength of the material.

Hereinafter, the wheel disc of the present disclosure will be described in more detail.

The wheel disc of the present disclosure may be a steel wheel disc. More specifically, the wheel disc of the present disclosure may be a steel plate wheel disc manufactured using a steel plate.

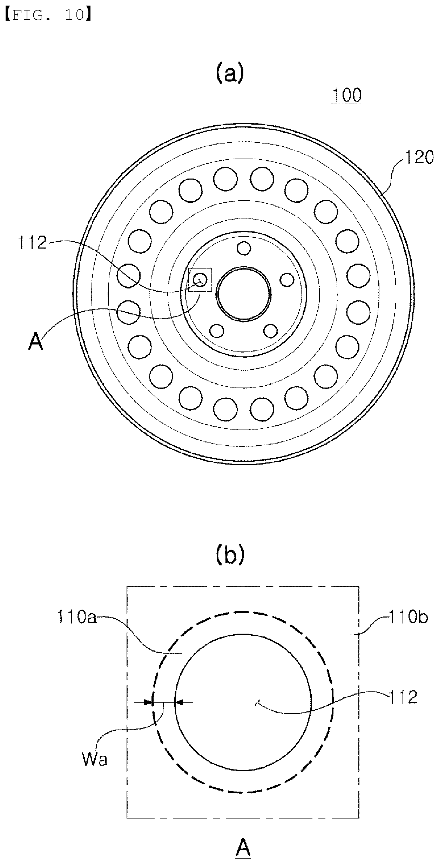

FIG. 10(a) is a view schematically illustrating a steel wheel 100 having the wheel disc 110 according to an aspect of the present disclosure, and FIG. 10(b) is an enlarged view of a peripheral portion of a bolt hole 112 of FIG. 10(a).

As illustrated in (a) of FIG. 10, a plurality of bolt holes 112 may be provided in the wheel disc 110 according to an aspect of the present disclosure. The plurality of bolt holes 112 may be formed to be spaced apart from each other at predetermined intervals in a circumferential direction of the wheel disc 110, and shape, diameter, and separation distance of the bolt holes 112 are not particularly limited.

As illustrated in (b) of FIG. 10, the wheel disc 110 according to an aspect of the present disclosure may be divided into a first region 110a extending in a circumferential direction of the bolt hole 112 and having a predetermined width $W_a$ and a second region 110b other than the first region 110a.

As will be described later, the wheel disc 110 according to an aspect of the present disclosure is manufactured by applying different heating conditions, cooling conditions, or heat treatment conditions to each region for a single material, and thus, the first region 110a and the second region 110b may be classified in terms of physical properties or microstructure. However, the first region 110a and the second region 110b may be divided by a non-bonding type boundary portion. That is, the first region 110a and the second region 110b are divided by applying different heating, cooling, or heat treatment conditions to a single material, and a boundary portion between the first region 110a and the second region 110b may be provided in a type different from a boundary portion formed by bonding such as welding.

In the wheel disc 110 according to an aspect of the present disclosure, an average tensile strength of the second region 110b may be 980 MPa or greater, and preferably, the average tensile strength of the second region 110b may be 1180 MPa or greater, or 1480 MPa or greater. That is, in the wheel disc 110 according to an aspect of the present disclosure, since the second region 110b, which is most of the region except the first region 110a in the peripheral region of the bolt hole, is formed of high-strength steel, the durability of the steel wheel 100 may be effectively improved.

Also, in the wheel disc 110 according to an aspect of the present disclosure, the first region 110a may be provided to have a lower average tensile strength than that of the second region 110b. In another wheel disc 110 according to an aspect of the present disclosure, the first region 110a near the bolt hole 112 is provided to have a lower tensile strength than the second region 110b, and thus, stress concentration near the bolt hole 112 may be effectively prevented even if high-strength steel is applied to the wheal disc 110. That is, in the wheel disc 110 according to an aspect of the present disclosure, the effect of increasing durability based on an increase in strength of the wheel disc 110 is promoted by applying the high-strength steel to the second region 110b, and the occurrence of fretting fatigue cracks near the bolt hole 112 may be effectively prevented by applying relatively low-strength steel to first region 110a near the bolt hole 112.

Therefore, in the wheel disc according to an aspect of the present disclosure, in grafting high-strength steel as a material of the wheel disc, a phenomenon that the effect of improving durability based on the increase in strength is canceled out by fretting fatigue cracks may be effectively prevented.

In the wheel disc according to an aspect of the present disclosure, the average tensile strength of the first region 110a may be 1/3 to 2/3 of the average tensile strength of the second region 110b. If the average tensile strength of the first region 110a is less than 1/3 of the average tensile strength of the second region 110b, the tensile strength of the first region 110a may be excessively low and durability of the first region 110a may be lowered, and if the average tensile strength of the first region 110a exceeds 2/3 of the average tensile strength of the second region 110b, the tensile strength of the first region 110a is excessively high and a possibility of an occurrence of fretting fatigue cracks may occur in the first region 110a.

In addition, in the wheel disc according to an aspect of the present disclosure, a width Wa of the first region 110a may be determined according to a region in which plastic deformation occurs near the bolt hole 112 during bolting. More preferably, the width Wa of the first region 110a may range from about 1 to 10 mm. If the width Wa of the first region 110a is less than 1 mm, the effect of reducing stress concentration in the peripheral region of the bolt hole 112 intended by the present disclosure cannot be achieved, and if the width Wa of the first region 110a exceeds 10 mm, it is not possible to achieve the desired high strength of the wheel disc 110 of the present disclosure. In addition, the first region 110a preferably has a uniform width Wa in circumferential direction of the bolt hole 112. Here, the uniform width Wa may refer to a case in which a difference between a maximum width $W_{amax}$ and a minimum width $W_{amin}$ of the first region 110a id less than 10% of an average width $W_{aeq}$ calculated by measuring a certain 20 points in the circumferential direction of the bolt hole 112.

Hereinafter, a method of manufacturing a wheel disc of the present disclosure will be described in more detail.

As the method of manufacturing a wheel disc of the present disclosure, various methods generally used in manufacturing a wheel disc may be used. However, in the method of manufacturing a wheel disc of the present disclosure, a process condition for the peripheral region of the bolt hole to have relatively lower tensile strength than other regions,

5

while promoting high strength of the wheel disc may be added.

A method of manufacturing a wheel disc according to an aspect of the present disclosure may include preparing a material for a wheel disc; forming the material to provide a wheel disc; and a heat treatment operation of heating and slowly cooling a peripheral region of a bolt hole of the wheel disc.

As a material for the wheel disc, any material may be used as long as it is a material capable of imparting high strength properties to the wheel disc, but preferably, cold high strength steel or heat-treated steel may be used. As the material forming method, both cold forming and hot forming may be used, and a process of heating and rapidly cooling the wheel disc after forming may be additionally provided.

After forming the wheel disc, an annealing heat treatment for heating and slowly cooling (annealing) the peripheral region of the bolt hole may be performed, and here, the heating may be performed on the region corresponding to the first region described above.

Therefore, since the method of manufacturing a wheel disc according to an aspect of the present disclosure includes the heat treatment process of heating and slowly cooling only the peripheral region of the bolt hole after forming the wheel disc, an overall strength of the wheel disc may be improved and the peripheral region of the bolt hole may have a relatively low tensile strength, so that durability of the wheel disc may be effectively improved.

In addition, a method of manufacturing a wheel disc may include preparing a material for a wheel disc; forming the material to provide a wheel disc; and a heat treatment operation of heating and cooling the wheel disc, wherein a peripheral region of a bolt hole of the wheel disc and a region other than the peripheral region of the bolt hole of the wheel disc are separately cooled, such that the peripheral region of the bolt hole of the wheel disc may be cooled by applying a slow cooling condition and the region other than the peripheral region of the bolt hole of the wheel disc may be cooled by applying a rapid cooling condition.

As a material for the wheel disc, any material may be used as long as it is a material capable of imparting high-strength properties to the wheel disc, but preferably, heat-treated steel may be used. As the material forming method, both cold forming and hot forming may be used, and a process of heating and rapidly cooling the wheel disc after forming may be additionally provided.

In the case of heating and rapidly cooling of the wheel disc, cooling may be performed by distinguishing between the peripheral region of the bolt hole (the region corresponding to the first region described above) and the region other than the peripheral region of the bolt hole, and cooling may be performed by applying a relatively low cooling rate to the peripheral region of the bolt hole. That is, although the wheel disc has overall high tensile strength due to rapid cooling, the peripheral region of the bolt hole may be cooled at a relatively low cooling rate, thereby effectively preventing the peripheral region of the bolt hole to have an excessively high strength.

Therefore, in the method of manufacturing a wheel disc according to an aspect of the present disclosure, after heating the wheel disc, the peripheral region of the bolt hole and the other regions are separately cooled by applying differential cooling rates to promote the wheel disc to have a high strength overall, and since the peripheral region of the bolt hole has a relatively low tensile strength, the durability of the wheel disc may be effectively improved.

In addition, a method of manufacturing a wheel disc according to an aspect of the present disclosure includes: preparing a material for a wheel disc; heating the material and subsequently forming a wheel disc using a mold; and cooling the wheel disc within the mold, wherein the material is heated by distinguishing between a peripheral region of a bolt hole of the wheel disc and a region other than the peripheral region of the bolt hole of the wheel disc, and the peripheral region of the bolt hole of the wheel disc may be heated to a temperature equal to or lower than Ac1 and the region other than the peripheral region of the bolt hole of the wheel disc may be heated to a temperature equal to or higher than Ac3.

As a material for the wheel disc, any material may be used as long as it is a material capable of imparting high-strength properties to the wheel disc, but preferably, heat-treated steel may be used.

As a method of forming a wheel disc, hot press forming may be used, and a material for hot press forming may be heated by distinguishing between heating end temperatures of the region corresponding to the peripheral region (the region corresponding to the first region described above) of the bolt hole of the wheel disc and the other regions. That is, heating may be performed on the region corresponding to the peripheral region of the bolt hole at a temperature equal to or lower than Ac1, and heating may be performed on the region corresponding to the region excluding the peripheral region of the bolt hole at a temperature equal to or higher than Ac3. After heating the material, a wheel disc may be formed using a mold, and the wheel disc may be cooled within the mold. Here, even if the same cooling conditions are applied to the entire region of the wheel disc within the mold, the region heated to the temperature equal to or lower than Ac1 may have a tensile strength lower than that of the region heated to the temperature equal to or higher than Ac3 because cooling initiation temperatures of the peripheral region of the bolt hole and the other regions are different.

Therefore, in the method of manufacturing a wheel disc according to an aspect of the present disclosure, the material for hot pressing forming may be heated by distinguishing between the region corresponding to the peripheral region of the bolt hole and the other regions, and thus, an overall strength of the wheel disc may be improved and the peripheral region of the bolt hole may have a relatively low tensile strength, so that durability of the wheel disc may be effectively improved.

In addition, a method of manufacturing a wheel disc includes: preparing a material for a wheel disc; heating the material and subsequently forming a wheel disc using a mold; and cooling the wheel disc within the mold, wherein the wheel disc is cooled by distinguishing between a peripheral region of a bolt hole of the wheel disc and a region other than the peripheral region of the bolt hole of the wheel disc, and the peripheral region of the bolt hole of the wheel disc may be cooled by applying a slow cooling condition and the region other than the peripheral region of the bolt hole of the wheel disc may be cooled by applying a rapid cooling condition.

As a material for the wheel disc, any material may be used as long as it is a material capable of imparting high-strength properties to the wheel disc, but preferably, heat-treated steel may be used.

As a method of forming a wheel disc, hot press forming may be used, and when the wheel disc is cooled after hot press forming, a relatively lower cooling rate may be applied to the peripheral region of the bolt hole than the region other than the peripheral region of the bolt hole by distinguishing between the peripheral region (the region corresponding to the first region described above) of the bolt hole and regions other than the peripheral region of the bolt hole. That is, since the peripheral region of the bolt hole cools relatively slowly, it may have a lower tensile strength than the regions other than the peripheral region of the bolt hole.

Therefore, in the method of manufacturing a wheel disc according to an aspect of the present disclosure, during hot press forming, cooling may be performed by distinguishing between the region corresponding to the peripheral region of the bolt hole and other regions, and in this case, cooling is performed on the peripheral region of the bolt hole by applying a cooling condition of a relatively slow cooling condition, so that the wheel disc may generally have a high strength, and since the peripheral region of the bolt hole has a relatively low tensile strength, durability of the wheel disc may be effectively improved.

[Mode for invention]

Hereinafter, the present disclosure will be described in more detail through examples.

(Example 1)

As illustrated in Table 1 below, wheel discs were manufactured using various manufacturing conditions, and a CFT was performed on each wheel disc. Here, the CFT used the 1.54 kN·m condition. Each wheel disc was manufactured to have the same shape and size, and bolt holes formed in the wheel discs were also manufactured to have the same number and size.

When it is difficult to directly measure tensile strength, a method of converting the tensile strength from a specific physical property value is widely used. In the case of the present disclosure, it was impossible to collect a tensile specimen due to a narrow measurement region, and thus, after measuring the Vickers hardness of each region, the tensile strength was calculated from the corresponding hardness value. Specifically, Vickers hardness for each region was measured with a load of 500 g using a Vickers hardness tester, and tensile strength was calculated by substituting the Vickers hardness value in Relational expression 1 below.

```
[Relational Expression 1]

Tensile strength [MPa] = 3.3762 * (Vickers hardness)
- 35.004
```

[Table 1]

| Material No | Forming condition | Heat treatment condition | Width of first region (mm) | Tensile strength (MPa) | | Vickers hardness (Hv) | | Durability performance of CFT (Cycle) |
|---|---|---|---|---|---|---|---|---|
| | | | | First region | Second region | First region | Second region | |
| 1 | Cold working | - | - | 1010 | 1010 | 309.5 | 309.5 | $22*10^4$ |
| | | Heating and slow cooling at 400°C for 10 minutes | 8 | 605 | 1010 | 189.6 | 309.5 | $53*10^4$ |
| 2 | Cold working + Heat treatment | (Entire wheel disc) After heating at 900°C for 6 minutes, rapidly cooling at a cooling rate of 50°C/s or higher | - | 1523 | 1523 | 461.5 | 461.5 | $31*10^4$ |
| | | (Entire wheel disc) After heating at 900°C for 6 minutes, rapidly cooling at a cooling rate of 50°C/s or higher (Region corresponding to first region) Heating at 550°C for 20 minutes and slow cooling (annealing treatment) | 4 | 983 | 1523 | 301.5 | 461.5 | $83*10^4$ |
| 3 | HPF | (Entire wheel disc) After heating at Ac3+50°C for 6 minutes, forming + rapid cooling at a cooling rate of 50°C/s or higher | - | 1584 | 1584 | 479.5 | 479.5 | $32*10^4$ |
| | | (Region corresponding to the first region) Heating at Ac1-100°C (region corresponding to second region) Heating at Ac3+50°C After heating for 6 minutes, forming + rapid cooling at a cooling rate of 50°C/s or higher | 3 | 750 | 1584 | 232.5 | 479.5 | $86*10^4$ |
| 4 | HPF | (Entire wheel disc) After heating at Ac3+50°C for 6 minutes, forming + rapid cooling at 50°C/s | - | 1584 | 1584 | 479.5 | 479.5 | $32*10^4$ |
| | | (Entire wheel disc) After heating at Ac3+50°C for 6 minutes, forming + (region corresponding to first region) Slow cooling to 5°C/s level (region corresponding second region) Rapid cooling at a cooling rate of 50°C/s or higher | 2 | 685 | 1587 | 213.3 | 480.4 | $85*10^4$ |

As illustrated in Table 1, in the case of the wheel disc subjected to softening in the peripheral portion of the bolt hole, it can be seen that the CFT durability performance is significantly improved compared to the wheel disc not subjected to softening. That is, it can be seen that the durability characteristics of the steel wheel may be effectively improved when the wheel disc is manufactured using high-strength steel and the peripheral region of the bolt hole is softened.

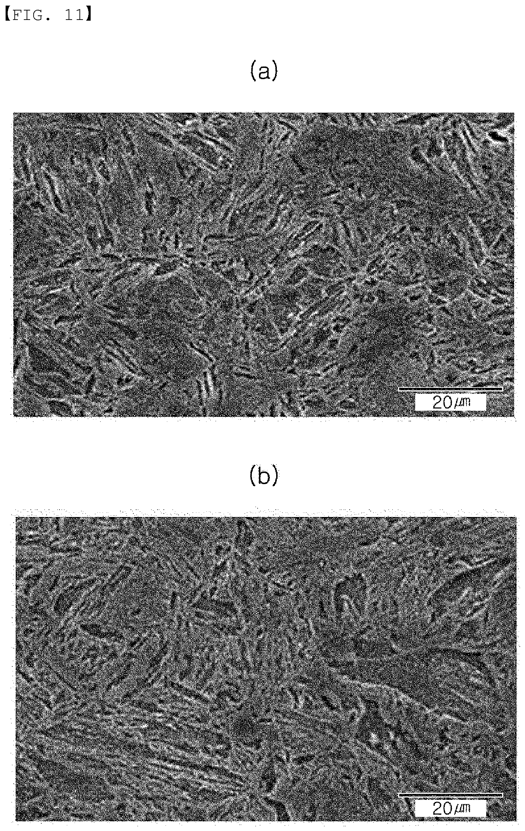

FIG. 11 is a photograph observing a structure of the first region of material No. 2. That is, (a) of FIG. 11 is a photograph of a structure of the first region subjected to rapid cooling after heating at 900°C for 6 minutes, and (b) of FIG. 11 is a photograph of a structure of the first region subjected to rapid cooling after heating at 900°C for 6 minutes and additionally heating and slow cooling at 550°C for 20 minutes. As illustrated in FIG. 11, it can be seen that, in the case of (a) of FIG. 11 in which an additional heat treatment was not performed, a martensitic structure was mainly observed, whereas in the case of (b) of FIG. 11, tempered martensite and cementite structures are mainly observed.

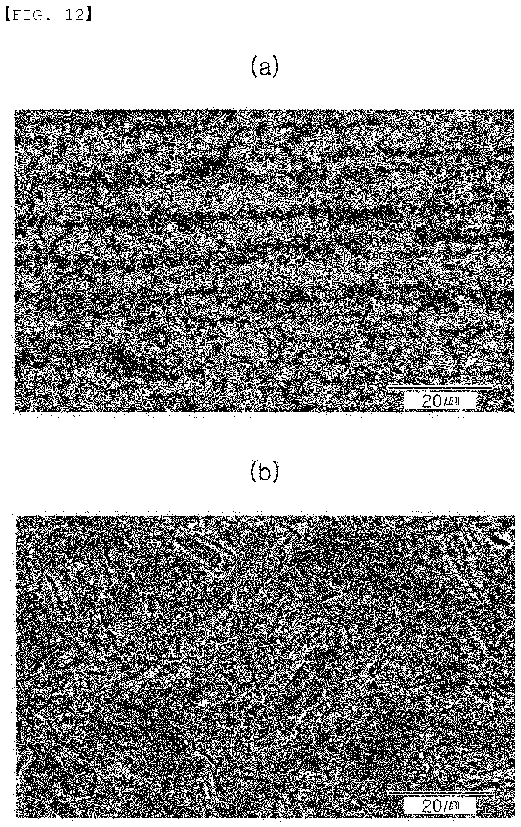

FIG. 12 is a photograph in which the structures of the first region and the second region were observed, respectively, in a case in which different heating temperatures were applied in material No. 3. That is, (a) of FIG. 12 is a photograph of the structure of the first region, which was formed by heating at (Ac1-100°C) for 6 minutes and then rapidly cooled at a cooling rate of 50°C/s or higher, and (b) of FIG. 12 is a photograph of the structure of the second region, which was formed by heating (Ac3+50°C) for 6 minutes and then rapidly cooled at a cooling rate of 50°C/s or higher. As illustrated in FIG. 12, it can be seen that, in the case of (a) of FIG. 12 heated at (Ac1-100°C) for 6 minutes, ferrite and pearlite structures were mainly observed, whereas in the case of (b) of FIG. 12 heated at (Ac3+50°C) for 6 minutes, the martensite structure is mainly observed.

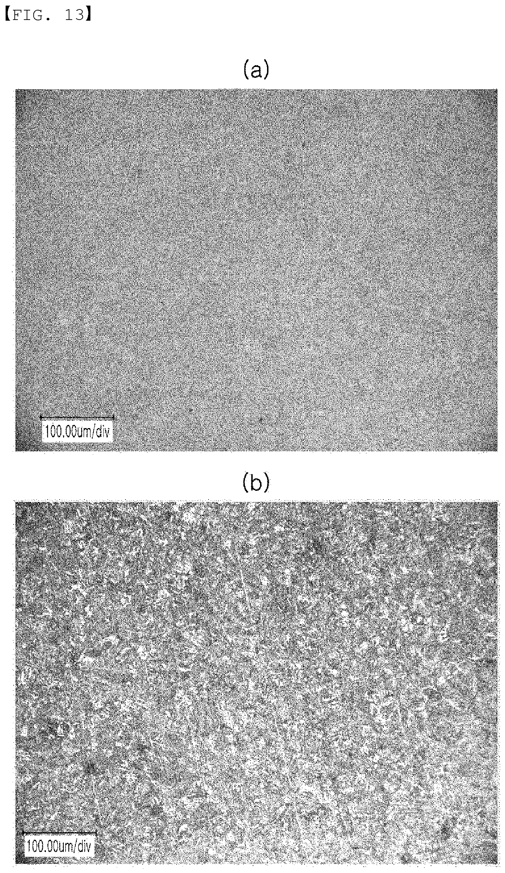

FIG. 13 is a photograph in which the structures of the first region and the second region are observed, respectively, in a case in which different cooling rates are applied in material No.4. That is, (a) of FIG. 13 is a photograph of the structure of the first region, which was formed by heating at (Ac3+50°C) for 6 minutes and then slowly cooled to a level of 5°C/s, and (b) of FIG. 13 is a photograph of the structure of the second region, which is formed by heating at (Ac3+50°C) for 6 minutes and then rapidly cooled at a cooling rate of 50°C/s or higher. As illustrated in FIG. 13, in the case of (a) of FIG. 13 to which a slow cooling condition of 5°C/s is applied, a bainite structure is mainly observed, whereas, in the case of (b) of FIG. 13 in which a rapid cooling condition of 50°C/s or higher is applied, a martensitic structure is mainly observed.

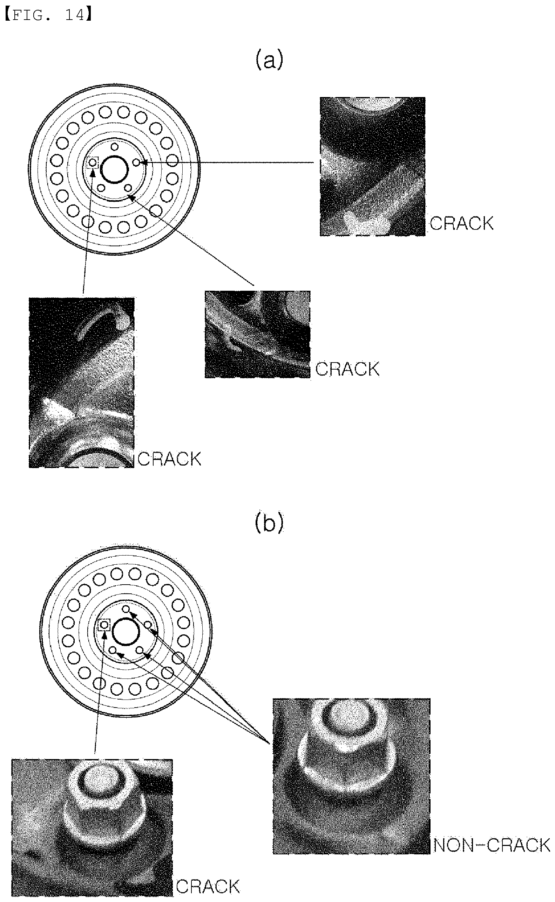

FIG. 14 is a photograph observing the peripheral region of the bolt hole after performing a CFT on each of the case of applying the same cooling rate and the case of applying a different cooling rate in material No.4. That is, (a) of FIG. 14 is a photograph of observing the peripheral region of the bolt hole of the wheel disc subjected to CFT evaluation after heating and forming the entire heating region at (Ac3 + 50°C) for 6 minutes and rapidly cooling the region to 50°C/s, and (b) of FIG. 14 is a photograph of observing the peripheral region of the bolt hole of the wheel disc subjected to CFT evaluation after heating and forming the entire heating region at (Ac3+50°C) for 6 minutes and then applying a slow cooling condition of 5°C/s level to the first region and applying a rapid cooling condition of 50°C/s or higher to the second region.

As illustrated in Table 1 and (a) of FIG. 14, it can be seen that, in the case of the wheel disc in which the entire heating region is heated and formed for 6 minutes at (Ac3 + 50°C) and rapidly cooled to 50°C/s, the CFT life is also relatively short and a large amount of cracks occur in the peripheral portion of the bolt hole. Meanwhile, as illustrated in Table 1 and (b) of FIG. 14, it can be seen that, in the case of the wheel disc in which the entire heating region is heated and formed for 6 minutes at (Ac3 + 50°C) and a slow cooling condition of 5°C/s level is applied to the first region and a rapid cooling condition of 50°C/s or higher is applied to the second region, a relatively long CFT life is secured and cracks occur only in one bolt hole region.

(Example 2)

Four wheel discs were manufactured by cold working the same material, and each was heated at 900°C for 6 minutes and then cooled at a cooling rate of 50°C/s. Each wheel disc was manufactured to have the same size and shape, and bolt holes formed in each wheel disc were also manufactured to have the same number and size. Thereafter, the peripheral region of the bolt hole was heated at 550°C for 20 minutes, slowly cooled, and then softened. Here, different widths of the heating region for each steel wheel were applied.

[Table 2]

| Classification | Width (mm) of first region | CFT durability performance (Cycle) |
|---|---|---|
| 2-1 | 0.5 | $30*10^4$ |
| 2-2 | 4 | $83*10^4$ |
| 2-3 | 8 | $78*10^4$ |
| 2-4 | 12 | $35*10^4$ |

As illustrated in Table 2, it can be seen that, in the case of wheel discs 2-2 and 2-3 in which the width of the first region satisfies the range of the present disclosure, excellent CFT durability performance is implemented, while in the case of wheel discs 2-1 and 2-4 in which the width of the first region does not satisfy the range of the present disclosure, relatively low CFT durability performance is implemented.

Therefore, it can be seen that the wheel disc according to an embodiment of the present disclosure may effectively contribute to the improvement of the durability of the steel wheel.

Although the present disclosure has been described in detail through examples above, other types of embodiments may also be implemented. Therefore, the spirit and scope of the claims set forth below are not limited to the embodiments.

While example embodiments have been shown and described above, it will be apparent to those skilled in the art that modifications and variations could be made without departing from the scope of the present disclosure as defined by the appended claims.

(Description of reference numerals)

1, 100: steel wheel 10, 110: wheel disc 20, 120: rim

110a: first region 110b: second region 112: bolt hole

## Claims

1. A wheel disc including a bolt hole for bolt fastening, the wheel disc comprising:

   a first region extending to have a predetermined width in a circumferential direction of the bolt hole; and
   a second region, other than the first region,
   wherein the first region has an average tensile strength lower than that of the second region.

2. The wheel disc of claim 1, wherein the average tensile strength of the first region is 1/3 to 2/3 of the average tensile strength of the second region.

3. The wheel disc of claim 1, wherein the average tensile strength of the second region is 980 MPa or greater.

4. The wheel disc of claim 1, wherein a width of the first region is 1 to 10 mm.

5. The wheel disc of claim 1, wherein the wheel disc is a steel plate wheel disc.

6. The wheel disc of claim 1, wherein the first region and the second region are divided by a non-bonding type boundary portion.

7. A method of manufacturing a wheel disc, the method comprising:

   preparing a material for a wheel disc;
   forming the material to provide a wheel disc; and
   softening a peripheral region of a bolt hole formed in the wheel disc.

8. A method of claim 7, wherein,
   in the softening of the peripheral region of the bolt hole, the peripheral region of the bolt hole is softened by heating and slowly cooling the peripheral region of the bolt hole, or the wheel disc is heated and rapidly cooled and the peripheral region of the bolt hole is softened by applying a slow cooling condition to the peripheral region of the bolt hole.

9. A method of manufacturing a wheel disc, the method comprising:

   preparing a material for a wheel disc;
   heating the material and subsequently forming a wheel disc using a mold; and
   cooling the wheel disc within the mold,
   wherein the material is heated by distinguishing between a peripheral region of a bolt hole of the wheel disc and a region other than the peripheral region of the bolt hole of the wheel disc such that the peripheral region of the bolt hole of the wheel disc is heated to a temperature equal to or lower than Ac1 and the region other than the peripheral region of the bolt hole of the wheel disc is heated to a temperature equal to or higher than Ac3, or
   wherein the wheel disc is cooled by distinguishing between the peripheral region of the bolt hole of the wheel disc and the region other than the peripheral region of the bolt hole of the wheel disc such that the peripheral region of the bolt hole of the wheel disc is cooled by applying a slow cooling condition and the region other than the peripheral region of the bolt hole of the wheel disc is cooled by applying a rapid cooling condition.

【FIG. 1】

(a)

1

10

12

20

(b)

1

20

10

12

【FIG. 2】

CRACK

【FIG. 3】

【FIG. 4】

【FIG. 5】

[FIG. 6]

EP 4 035 904 A1

【FIG. 7】

【FIG. 8】

【FIG. 9】

【FIG. 10】

(a)

100

120

112

A

(b)

110a

110b

112

Wa

A

【FIG. 11】

(a)

(b)

【FIG. 12】

(a)

20 μm

(b)

20 μm

【FIG. 13】

(a)

(b)

【FIG. 14】

(a)

CRACK

CRACK

CRACK

(b)

NON-CRACK

CRACK

## INTERNATIONAL SEARCH REPORT

| International application No. |
| --- |
| **PCT/KR2020/012497** |

### A. CLASSIFICATION OF SUBJECT MATTER

**B60B 3/04**(2006.01)i; **B60B 7/00**(2006.01)i; **B21D 13/10**(2006.01)i

According to International Patent Classification (IPC) or to both national classification and IPC

### B. FIELDS SEARCHED

Minimum documentation searched (classification system followed by classification symbols)

B60B 3/04(2006.01); B21D 13/10(2006.01); B21D 22/02(2006.01); B21D 22/20(2006.01); B21D 37/01(2006.01); B21D 37/16(2006.01); B21J 1/06(2006.01); B60B 3/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 볼트(bolt), 휠 디스크(wheel disk), 폭(width), 영역(area), 평균(average), 인장강도(tensile strength)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2017-0066750 A (POSCO) 15 June 2017 (2017-06-15)<br>See paragraph [0035]; and figures 2-3. | 1-9 |
| A | KR 10-2010-0132371 A (POSCO) 17 December 2010 (2010-12-17)<br>See paragraphs [0044]-[0048]; and figures 7-8. | 1-9 |
| A | KR 10-1792176 B1 (THYSSENKRUPP STEEL EUROPE AG) 31 October 2017 (2017-10-31)<br>See paragraph [0041]; and figure 2. | 1-9 |
| A | JP 2005-193287 A (NIPPON STEEL CORP.) 21 July 2005 (2005-07-21)<br>See claims 1-3; and figure 1. | 1-9 |
| A | KR 10-1518626 B1 (POSCO) 07 May 2015 (2015-05-07)<br>See paragraphs [0029]-[0064]; and figures 1-3. | 1-9 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 February 2021** | **10 February 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2020/012497**

| Patent document cited in search report | | | Publication date (day/month/year) | Patent family member(s) | | | Publication date (day/month/year) |
|---|---|---|---|---|---|---|---|
| KR | 10-2017-0066750 | A | 15 June 2017 | KR | 10-1786231 | B1 | 18 October 2017 |
| KR | 10-2010-0132371 | A | 17 December 2010 | KR | 10-1153595 | B1 | 11 June 2012 |
| KR | 10-1792176 | B1 | 31 October 2017 | CN | 102481613 | A | 30 May 2012 |
| | | | | DE | 102009043926 | A1 | 10 March 2011 |
| | | | | EP | 2473297 | A2 | 11 July 2012 |
| | | | | EP | 2473297 | B1 | 11 February 2015 |
| | | | | EP | 2896466 | A1 | 22 July 2015 |
| | | | | ES | 2536288 | T3 | 22 May 2015 |
| | | | | JP | 2013-503748 | A | 04 February 2013 |
| | | | | JP | 2015-226936 | A | 17 December 2015 |
| | | | | JP | 5827621 | B2 | 02 December 2015 |
| | | | | KR | 10-2012-0093189 | A | 22 August 2012 |
| | | | | US | 2012-0186705 | A1 | 26 July 2012 |
| | | | | US | 8980020 | B2 | 17 March 2015 |
| | | | | WO | 2011-026712 | A2 | 10 March 2011 |
| | | | | WO | 2011-026712 | A3 | 21 July 2011 |
| JP | 2005-193287 | A | 21 July 2005 | None | | | |
| KR | 10-1518626 | B1 | 07 May 2015 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170066750